# EUROPEAN PATENT APPLICATION

(11) **EP 4 841 544 A1**
(43) Date of publication of application: **18.11.2026**
(21) Application number: 24916534.1
(22) Date of filing: 29.10.2024
(51) Int. Cl.: G06Q 30/0601

(54) **INFORMATION DISPLAY METHOD AND APPARATUS, ELECTRONIC DEVICE, MEDIUM, AND PRODUCT**

(30) Priority: 10.01.2024 CN 202410039659
(71) Applicant: Beijing Youzhuju Network Technology Co., Ltd., Beijing 101299 (CN)
(72) Inventor: LIU, Mengmeng, Beijing 100028 (CN); HU, Jiali, Beijing 100028 (CN); XIE, Zhiyao, Beijing 100028 (CN)
(74) Representative: Isarpatent
(86) International application number: PCT/CN2024/128219
(87) International publication number: WO 2025/148483

(57) **Abstract**

Embodiments of the present disclosure disclose an information display method and apparatus, an electronic device, a storage medium, and a product. The method includes: displaying, in response to a trigger operation for profile display, profile information corresponding to a target account, wherein the profile information includes an object recommendation identifier corresponding to the target account, and the object recommendation identifier corresponding to the target account is determined based on object feature information of objects in an object collection corresponding to the target account; and displaying, in response to a trigger operation on any object recommendation identifier, a recommended object display page corresponding to the object recommendation identifier, where the recommended object display page includes object attribute information of a recommended object corresponding to the object recommendation identifier.

## Description

### CROSS-REFERENCE TO RELATED APPLICATION(S)

The present application claims priority to Chinese Patent Application No. 202410039659.1, filed on January 10, 2024 and entitled "INFORMATION DISPLAY METHOD AND APPARATUS, ELECTRONIC DEVICE, MEDIUM, AND PRODUCT", which is incorporated herein by reference in its entirety.

### FIELD

Embodiments of the present disclosure relate to the field of information processing technologies, and in particular to an information display method and apparatus, an electronic device, a medium, and a product.

### SUMMARY

The present disclosure provides an information display method and apparatus, an electronic device, a medium, and a product.

According to a first aspect, an embodiment of the present disclosure provides an information display method. The method includes:
displaying, in response to a trigger operation for profile display, profile information corresponding to a target account, where the profile information includes an object recommendation identifier corresponding to the target account, and the object recommendation identifier corresponding to the target account is determined based on object feature information of objects in an object collection corresponding to the target account; and
displaying, in response to a trigger operation for any object recommendation identifier, a recommended object display page corresponding to the object recommendation identifier, where the recommended object display page includes object attribute information of a recommended object corresponding to the object recommendation identifier.

According to a second aspect, an embodiment of the present disclosure further provides an information display apparatus. The apparatus includes:
a profile information display module configured to display profile information corresponding to a target account in response to a trigger operation for profile display, where the profile information includes an object recommendation identifier corresponding to the target account, and the object recommendation identifier corresponding to the target account is determined based on object feature information of objects in an object collection corresponding to the target account; and
an object information display module configured to display, in response to a trigger operation for any object recommendation identifier, a recommended object display page corresponding to the object recommendation identifier, where the recommended object display page includes object attribute information of a recommended object corresponding to the object recommendation identifier.

According to a third aspect, an embodiment of the present disclosure further provides an electronic device. The electronic device includes:
one or more processors; and
a storage apparatus configured to store one or more programs, where
the one or more programs, when executed by the one or more processors, cause the one or more processors to implement the information display method according to any one of the embodiments of the present disclosure.

According to a fourth aspect, an embodiment of the present disclosure further provides a storage medium including computer-executable instructions that, when executed by a computer processor, are configured to perform the information display method according to any one of the embodiments of the present disclosure.

According to a fifth aspect, an embodiment of the present disclosure further provides a computer program product including a computer program that, when executed by a processor, causes the information display method according to any one of the embodiments of the present disclosure to be implemented.

According to the embodiments of the present disclosure, the profile information corresponding to the target account is displayed in response to the trigger operation for the profile display, where the profile information includes the object recommendation identifier corresponding to the target account, and the object recommendation identifier corresponding to the target account is determined based on the object feature information of the object in the object collection corresponding to the target account; and in response to the trigger operation for any object recommendation identifier, the recommended object display page corresponding to the object recommendation identifier is displayed, where the recommended object display page includes the object attribute information of the recommended object corresponding to the object recommendation identifier.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of an information display method according to an embodiment of the present disclosure;
FIG. 2 is a schematic flowchart of an information display method according to an embodiment of the present disclosure;
FIG. 3 is a schematic flowchart of an information display method according to an embodiment of the present disclosure;
FIG. 4 is a schematic diagram of an information display effect according to an embodiment of the present disclosure;
FIG. 5 is a schematic diagram of an information display effect according to an embodiment of the present disclosure;
FIG. 6 is a schematic structural diagram of an information display apparatus according to an embodiment of the present disclosure; and
FIG. 7 is a schematic structural diagram of an electronic device according to an embodiment of the present disclosure.

### DETAILED DESCRIPTION OF EMBODIMENTS

Embodiments of the present disclosure will be described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Further, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

It should be understood that before the use of the technical solutions disclosed in the embodiments of the present disclosure, a user shall be informed of the type, range of use, use scenarios, etc., of personal information involved in the present disclosure in an appropriate manner in accordance with relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, according to the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Further, the pop-up window may also include a selection control for the user to choose whether to "agree" or "disagree" to provide the personal information to the electronic device.

It should be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It should be understood that data involved in the technical solutions (including, but not limited to, the data itself and the access to or use of the data) shall comply with the requirements of corresponding laws, regulations, and relevant provisions.

During an e-commerce live stream, an item being recommended in the live stream may not necessarily meet the needs of users viewing the stream. The users viewing the stream may access a store or showcase of a streamer account to further browse information about other items. Alternatively, during non-live streaming hours, if a user viewing the stream is interested in items in a store or showcase of a particular account, the user may also access the store or showcase of the corresponding account to browse item information. In a path along which the user viewing the stream accesses a store or showcase of any account, a profile card for the corresponding store or showcase is displayed. However, currently, content of profile cards for stores or showcases is relatively simple and lacks diversity, failing to help the users viewing the stream to quickly find needed items.

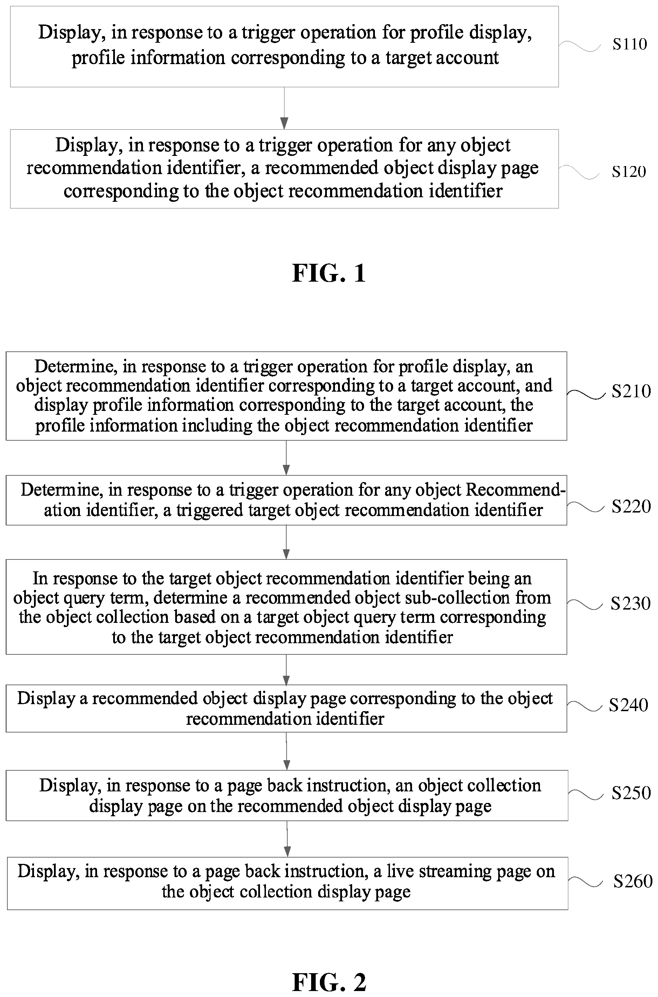

FIG. 1 is a schematic flowchart of an information display method according to an embodiment of the present disclosure. This embodiment of the present disclosure is applicable to a scenario where user profile information is displayed, particularly in a case where a user is associated with an object collection such as a store or showcase. The method may be performed by an information display apparatus, and the apparatus may be implemented in the form of software and/or hardware. Optionally, the information display apparatus may be implemented through an electronic device, and the electronic device may be a mobile terminal, a PC terminal, a server, or the like.

As shown in FIG. 1, the information display method includes:
S110: Display profile information corresponding to a target account in response to a trigger operation for profile display.

In an application platform with social attributes, when one user is interested in another user, the user may view profile information of an object of interest by clicking on an avatar or a username of the user of interest, or other functional controls that, when triggered, display the profile information of the user of interest. The content of one user of interest to another may be any information content associated with the user of interest, such as a name, an avatar, shared content on the application platform, live streaming content data, or information about associated object collections of any user of interest.

Typically, profile information of a user may include a username, a user avatar or identifier, or may further include user brief introduction information or other content. When the application platform with the social attributes has a commercial business function, each user may set an object collection associated with an account to display item objects on which business interaction may be performed. For example, each user may start a store or showcase on the application platform with the commercial business function, and products included in the store or showcase constitute an object collection associated with the user account. Correspondingly, entry link information for the object collection may also be set in the profile information of the user. When the user triggers the entry link information, objects in the object collection can be displayed.

In this embodiment, when the user triggers the profile display, the information display apparatus may display the profile information corresponding to the target account in response to the trigger operation for the profile display. The target account is an account corresponding to another user who is of interest to the user and whose profile information is to be viewed, and is an account associated with the trigger operation for the profile display.

In particular, the displayed profile information corresponding to the target account in this embodiment includes an object recommendation identifier corresponding to the target account, and the object recommendation identifier corresponding to the target account is determined based on object feature information of objects in an object collection corresponding to the target account. The object feature information may include object attribute information of the objects, such as object classification, which may be classification results in different dimensions such as functions, styles, and suitable demographics. The object feature information may further include object interactive information for business interaction with the objects, such as object favorites data, sales data, or inventory data.

In an optional implementation, one or more pieces of object feature information may serve as object recommendation identifiers, or object information summarized from the object feature information may be used as object recommendation identifiers.

S120: Display, in response to a trigger operation for any object recommendation identifier, a recommended object display page corresponding to the object recommendation identifier.

Typically, the entry link information for the object collection may be set in the profile information of one target account, and the user may access an object collection display page corresponding to the target user based on the entry link information, corresponding to an access entry for the store or showcase.

In this implementation, the object recommendation identifier is further displayed in the profile information of the target account, and the user may also access to corresponding recommended object display pages through the object recommendation identifier. Specifically, when the user triggers any object recommendation identifier in the profile information, the information display apparatus may display the recommended object display page corresponding to the triggered object recommendation identifier. The recommended object display page includes object attribute information of a recommended object corresponding to the object recommendation identifier.

It should be understood that the object recommendation identifier is determined based on the object feature information, and the recommended object corresponding to the object recommendation identifier may be an object in the object collection of the target account, that is related to the object feature information associated with the triggered object recommendation identifier.

The object attribute information included in the recommended object display page may be the object attribute information of the recommended objects, such as object classification, which may be classification results in different dimensions such as functions, styles, and adaptive scenarios, or object interactive information for business interaction with the objects, such as object favorites data, sales data, or inventory data. The object attribute information of the recommended objects on the recommended object display page may be the same object attribute information or different object attribute information.

According to the technical solution in this embodiment of the present disclosure, the profile information corresponding to the target account is displayed in response to the trigger operation for the profile display, where the profile information includes the object recommendation identifier corresponding to the target account, and the object recommendation identifier corresponding to the target account is determined based on the object feature information of the object in the object collection corresponding to the target account; and in response to the trigger operation for any object recommendation identifier, the recommended object display page corresponding to the object recommendation identifier is displayed, where the recommended object display page includes the object attribute information of the recommended object corresponding to the object recommendation identifier. The technical solutions in the embodiments of the present disclosure solve the problem of monotonous information display content in user-associated profiles. Profile card information can be dynamically enriched based on the object feature information of the object collection of the user, thereby displaying more object recommendation information, and enhancing a traffic redirection capability of the profile display content.

FIG. 2 is a schematic flowchart of another information display method according to an embodiment of the present disclosure. Based on the above-mentioned embodiment, the process of determining the object recommendation identifier corresponding to the target account is further elaborated. The method may be performed by an information display apparatus. The apparatus may be implemented in the form of software and/or hardware, and is optionally implemented through an electronic device. The electronic device may be a mobile terminal, a PC terminal, a server, or the like.

As shown in FIG. 2, the information display method includes:
S210: Determine an object recommendation identifier corresponding to a target account in response to a trigger operation for profile display, and display profile information corresponding to the target account, where the profile information includes the object recommendation identifier.

The object recommendation identifier corresponding to the target account is determined based on object feature information of objects in an object collection corresponding to the target account. The object feature information may include object attribute information of the objects, or may further include object interactive information for business interaction with the objects.

When object information summarized based on the object feature information is used as the object recommendation identifier, a method for determining the object recommendation identifier corresponding to the target account includes the following steps:
Step 1: Perform clustering analysis on the object feature information of the objects in the object collection to obtain a plurality of object query terms.

The clustering analysis of the object feature information may involve summarizing the object feature information of the plurality of objects in the object collection from a dimension of textual semantic analysis, thereby obtaining corresponding analytical results of the object feature information to serve as the object query terms.

In the clustering analysis process, data preprocessing may be performed on text data corresponding to the object feature information, and then any available clustering algorithm (e.g., K-Means and hierarchical clustering) is used to calculate a text feature similarity and perform clustering, thereby obtaining a clustering result.

Step 2: Select, from the plurality of object query terms, as many target object query terms as identifier display positions corresponding to object recommendation identifiers, and determine the target object query terms or the target object query terms together with corresponding object images as the object recommendation identifiers.

When the object recommendation identifier is displayed in a profile card that displays profile information, a corresponding identifier display position may be set. There may be one or more identifier display positions. Considering a size of the profile card, 3 to 4 identifier display positions may be typically set.

Accordingly, the quantity of the identifier display positions determines the quantity of object recommendation identifiers to be determined. When the quantity of the plurality of object query terms obtained through object feature information clustering is greater than the quantity of the identifier display positions, as many object query terms as the identifier display positions corresponding to the object recommendation identifiers may be selected from the plurality of object query terms.

Specifically, in the process of selecting, from the plurality of object query terms, as many target object query terms as the identifier display positions corresponding to the object recommendation identifiers, search popularity information for the object query terms may be determined based on historical object search information corresponding to the object collection; and then, as many target object query terms as the identifier display positions corresponding to object recommendation identifiers are selected from all the object query terms based on the search popularity information.

The historical object search information may be search text content input when searching for the objects in the object collection corresponding to the target account in a preset historical duration. The search text content may be the object query terms, or content semantically associated with the object query terms. Therefore, the search popularity information for the object query terms may be calculated. The search popularity information may be frequencies of occurrence of the object query terms or the text content semantically associated with the object query terms in a preset historical duration when the user performs object queries in the process of interacting with the object collection. Accordingly, a corresponding quantity of target object query terms may be selected based on numerical values of popularity evaluation data representing the search popularity information that corresponds to the object query terms.

After determining the target object query terms, the target object query terms or the target object query terms together with the corresponding object images may be determined as the object recommendation identifier to be displayed in the profile information.

In an optional method, when the object feature information is used as the object recommendation identifier, as many recommended objects as identifier display positions corresponding to object recommendation identifiers may be determined based on preset partial object feature information of the objects in the object collection; and then, the partial object feature information of the plurality of recommended objects or the partial object feature information together with corresponding object images are used as the object recommendation identifiers to be displayed in the profile information.

S220: Determine a triggered target object recommendation identifier in response to a trigger operation for any object recommendation identifier.

When the user triggers any object recommendation identifier in the profile information, the information display apparatus may display a recommended object display page corresponding to the triggered object recommendation identifier. Different object recommendation identifiers correspond to different object attribute information, and therefore when the user triggers different object recommendation identifiers, different recommended object display pages may be correspondingly displayed.

Based on the above-mentioned process of determining the object recommendation identifiers, the triggered target object recommendation identifier may be an object query term or a recommended object.

It should be understood that when an object image, as the object recommendation identifier together with the object query term or the recommended object, is triggered, the corresponding target object recommendation identifier may also be determined as the corresponding object query term or recommended object.

S230: When the object recommendation identifier is an object query term, determine a recommended object sub-collection from the object collection based on a target object query term corresponding to the target object recommendation identifier.

Recommended objects in the recommended object sub-collection are associated with the target object query term. Specifically, using the target object query term as a search term, the object collection is searched for objects associated with the target object query term, the objects are determined as the recommended objects, and correspondingly, the recommended object sub-collection is obtained.

S240: Display a recommended object display page corresponding to the object recommendation identifier.

In this step, the recommended object display page corresponding to the object recommendation identifier includes object attribute information of the recommended objects in the above-mentioned recommended object sub-collection.

Further, the user may also perform a further interactive operation on the recommended object display page corresponding to the object recommendation identifier of the target account, such as switching between different display pages, accessing a detailed display page of any recommended object, and business interaction with any recommended object. When the user finishes browsing the recommended object display page, the following steps may also be performed:
S250: Display, in response to a page back instruction, an object collection display page on the recommended object display page.

The object collection display page includes the object attribute information of all the objects in the object collection corresponding to the target account.

For example, on an interactive page for a store or showcase, different page redirection tabs may be set, including the object collection display page for the object attribute information of all the objects in the object collection corresponding to the target account, which may correspond to an object display page corresponding to the "All" tab.

S260: Display, in response to a page back instruction, a live streaming page on the object collection display page.

The live streaming page includes live video stream data associated with the target account.

That is, when the user triggers a profile display operation on the live streaming page of the target account, the object collection display page may be navigated to the live streaming page of the target account.

Additionally, when the user triggers the profile display operation while the target account is in a non-live streaming state and finishes browsing the object collection display page corresponding to the object collection, a corresponding page during triggering of the profile display may also be presented.

It should be further noted that in S210, after performing the clustering analysis on the object feature information of the objects in the object collection to obtain the plurality of object query terms, if the quantity of all the clustered object query terms is less than a preset quantity of identifier display positions, as many recommended objects as the identifier display positions corresponding to the object recommendation identifiers may be determined based on the preset partial object feature information of the objects in the object collection; and the partial object feature information of the plurality of recommended objects or the partial object feature information together with corresponding object images are used as the object recommendation identifiers.

Correspondingly, when the object recommendation identifier is a recommended object, in response to the trigger operation for any object recommendation identifier, the recommended object display page corresponding to the object recommendation identifier may be displayed, and a display position of the recommended object corresponding to the object recommendation identifier is set at the first position of the recommended object display page. The recommended object display page corresponding to the object recommendation identifier includes the object attribute information of all the objects in the object collection, and the recommended object corresponding to the object recommendation identifier is an object in the object collection. That is, when the object recommendation identifier is the recommended object, the page corresponding to the "All" tab may be displayed in response to the trigger operation for any object recommendation identifier, and the recommended object corresponding to the triggered target object recommendation identifier is given priority for display on the page corresponding to the "All" tab.

According to the technical solution in this embodiment of the present disclosure, the object recommendation identifier corresponding to the target account is determined in response to the trigger operation for the profile display, and the profile information of the target account that includes the object recommendation identifier is displayed; the triggered target object recommendation identifier is determined in response to the trigger operation for any object recommendation identifier; when the object recommendation identifier is the object query term, the recommended object sub-collection is determined from the object collection based on the target object query term corresponding to the target object recommendation identifier; the recommended object display page corresponding to the object recommendation identifier is displayed, and the object collection display page is displayed in response to the page back instruction on the recommended object display page; and the live streaming page is displayed in response to the page back instruction on the object collection display page. Additionally, when the object recommendation identifier is the recommended object, in response to the trigger operation for any object recommendation identifier, the recommended object display page corresponding to the object recommendation identifier is displayed, and the display position of the recommended object corresponding to the object recommendation identifier is set at the first position of the recommended object display page. The recommended object display page corresponding to the object recommendation identifier includes object attribute information of all the objects in the object collection, and the recommended object corresponding to the object recommendation identifier is an object in the object collection. The technical solutions of the embodiments of the present disclosure solve the problem of monotonous information display content in user-associated profiles. The recommended object identifiers may be determined based on the object feature information of the object collection of the user or the object query terms obtained after object feature information clustering, thereby dynamically enriching profile card information, and displaying more object recommendation information. Additionally, the corresponding recommended object page may be further displayed through the recommended object identifier, thereby enhancing a traffic redirection capability of the profile display content.

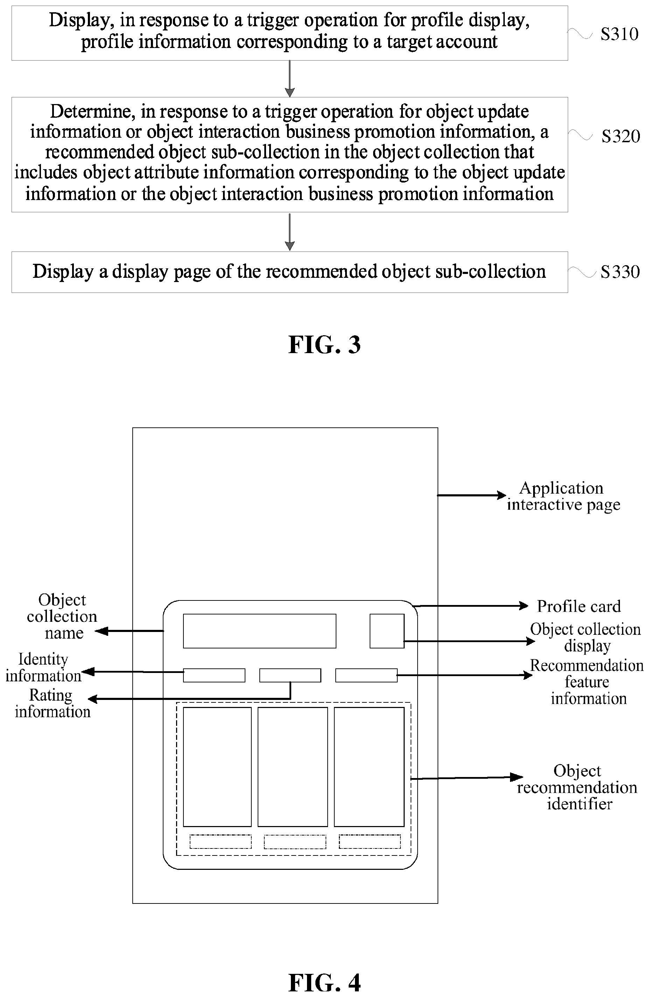

FIG. 3 is a schematic flowchart of an information display method according to an embodiment of the present disclosure. Based on the above-mentioned embodiments, the profile information display content and the information interaction process are further elaborated. The method may be performed by an information display apparatus. The apparatus may be implemented in the form of software and/or hardware, and is optionally implemented through an electronic device. The electronic device may be a mobile terminal, a PC terminal, a server, or the like.

As shown in FIG. 3, the information display method includes:
S310: Display profile information corresponding to a target account in response to a trigger operation for profile display.

The profile information includes an object recommendation identifier corresponding to the target account, and the object recommendation identifier corresponding to the target account is determined based on object feature information of objects in an object collection corresponding to the target account.

Additionally, the profile information further includes identity information, rating information, and/or recommendation feature information of the target account, and/or object update information and/or object interaction business promotion information in the object collection.

The identity information may include name information of the target account, or may further include tab information indicating whether the target account is an original merchant account for objects in the object collection or a promotional influencer account for objects in the object collection. When the number of words in the identity information exceeds a corresponding information display range on the page, information truncation may be performed, and an excess part is not shown temporarily.

The rating information may represent evaluation information of the target account in a corresponding interaction business, such as a user evaluation rating or evaluation score. The recommendation feature information may be information content that shows advantages of the target account, or information that shows the total sales volume of objects.

The object update information and/or the object interaction business promotion information in the object collection are/is business-related information of the target account. The object update information may represent object feature information of newly added objects in the object collection or prompt information about object additions, such as "N new items await unlocking" or "New arrivals!"

The object interaction business promotion information may correspond to rule information in a business activity, such as discount rule information, group-buying rule information, and time-limited activity rule information. For example, it may be "Unlock N low-priced items" or "Get y yuan off when spending x yuan".

S320: Determine, in response to a trigger operation for the object update information or the object interaction business promotion information, a recommended object sub-collection in the object collection that includes object attribute information corresponding to the object update information or the object interaction business promotion information.

In this embodiment, the information display apparatus can not only display the recommended object display page corresponding to the triggered object recommendation identifier in response to the trigger operation of the user on the object recommendation identifier, but also respond to the trigger operation of the user on the object update information or the object interaction business promotion information.

When the user triggers the object update information or the object interaction business promotion information, the information display apparatus determines, in response to the trigger operation for the object update information or the object interaction business promotion information, the recommended object associated with the triggered object update information or object interaction business promotion information from all the objects in the object collection corresponding to the target account, thereby determining the corresponding recommended object sub-collection.

For example, when the triggered information is a piece of object update information, an object with object attribute information of "new arrival" may be determined as a recommended object, thereby obtaining a corresponding recommended object sub-collection. If a "new arrival" tab is set in the object collection, an object in an object sub-collection that corresponds to the "new arrival" tab may be directly used as a recommended object, and the object sub-collection corresponding to the "new arrival" tab is the recommended object sub-collection. If the triggered information is a piece of object interaction business promotion information, in a similar way, an object participating in a business interaction promotion activity, namely, an object with object attribute information of "promotional item", may be determined as a recommended object, resulting in a corresponding recommended object sub-collection. If a "promotional" tab is set in the object collection, an object in an object sub-collection that corresponds to the "promotional" tab may be directly used as a recommended object, and the object sub-collection corresponding to the "promotional" tab is the recommended object sub-collection.

S330: Display a display page of the recommended object sub-collection.

The display page of the recommended object sub-collection includes the object attribute information of the recommended object in the above-mentioned recommended object sub-collection.

According to the technical solution in this embodiment of the present disclosure, the profile information corresponding to the target account is displayed in response to the trigger operation for the profile display, where the profile information includes the object recommendation identifier corresponding to the target account, the object recommendation identifier corresponding to the target account is determined based on the object feature information of the object in the object collection corresponding to the target account, and the profile information further includes the identity information, the rating information, and/or the recommendation feature information of the target account, and/or the object update information and/or the object interaction business promotion information in the object collection; and in response to the trigger operation for the object update information or the object interaction business promotion information, the recommended object sub-collection in the object collection that includes the object attribute information corresponding to the object update information or the object interaction business promotion information is determined, and the display page of the recommended object sub-collection is displayed. The technical solutions of the embodiments of the present disclosure solve the problem of monotonous information display content in user-associated profiles. The recommended object identifiers may be determined based on the object feature information of the object collection of the user or the object query terms obtained after object feature information clustering, thereby dynamically enriching profile card information. Moreover, in addition to the recommended object identifiers, more feature information about the target account and the corresponding object collection is also displayed, thereby further enriching profile display content. Moreover, the corresponding recommended object page may also be further displayed in response to the trigger operation for the object collection feature information, thereby enhancing a traffic redirection capability of the profile display content.

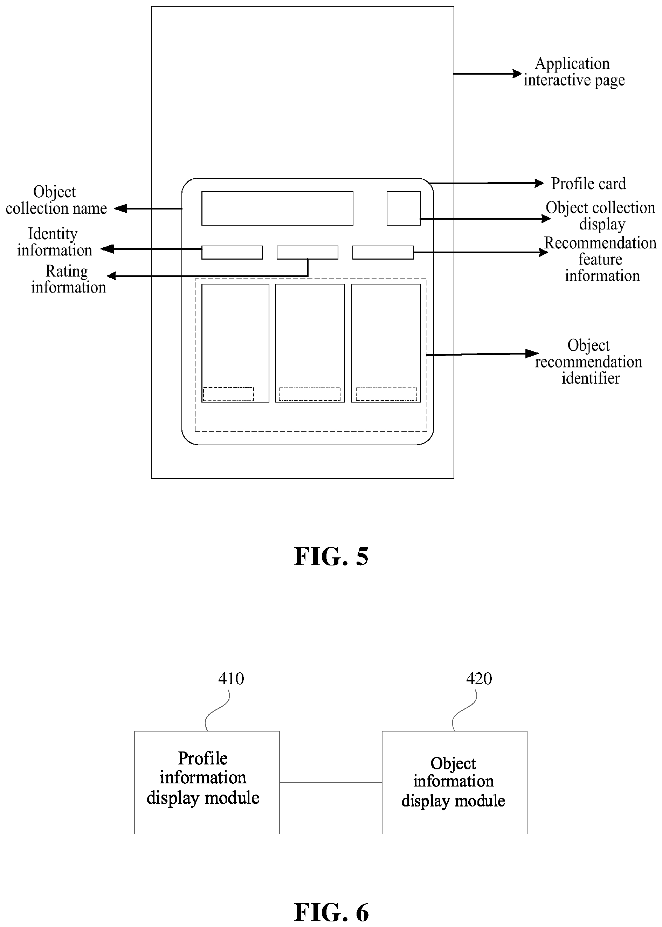

In an optional implementation, for a profile information display effect, reference may be made to schematic diagrams of information display effects shown in FIG. 4 and FIG. 5.

On an interactive page of an application, after the user triggers a profile display operation for a target account, a profile card of a target user may be displayed. Everything presented on the profile card may be considered as profile information. The profile information may include an object collection name (i.e., a target account name), identity information, rating information, recommendation feature information, and object recommendation identifier information. The interactive page of the application may be a live streaming page of the target account or a non-live streaming page.

The difference between FIG. 4 and FIG. 5 lies in a display form of the object recommendation identifiers. In FIG. 4, a large solid rectangle may represent an object image, and a dashed block below the large solid rectangle may represent an object query term, and the object image is associated with the object query term. The object query term may be displayed separately. In FIG. 5, a large solid rectangle may represent an object image of a recommended object, and a small dashed block in the large solid rectangle may represent object feature information used to determine the recommended object. The object feature information may also be displayed separately.

A single large solid rectangle may correspond to an identifier display position for a single object recommendation identifier. The quantity of solid rectangles in FIG. 4 and FIG. 5 is merely illustrative, and the quantity of identifier display positions may be set correspondingly in any example.

FIG. 6 is an information display apparatus according to an embodiment of the present disclosure. The apparatus is applicable to a scenario where user profile information is displayed, particularly in a case where a user is associated with an object collection such as a store or showcase. The information display apparatus may be implemented in the form of software and/or hardware, and may be configured in an electronic device, and the electronic device may be a mobile terminal, a PC terminal, a server, or the like.

As shown in FIG. 6, the information display apparatus includes: a profile information display module 410 and an object information display module 420.

The profile information display module 410 is configured to display profile information corresponding to a target account in response to a trigger operation for profile display. The profile information includes an object recommendation identifier corresponding to the target account, and the object recommendation identifier corresponding to the target account is determined based on object feature information of objects in an object collection corresponding to the target account. The object information display module 420 is configured to display, in response to a trigger operation for any object recommendation identifier, a recommended object display page corresponding to the object recommendation identifier. The recommended object display page includes object attribute information of a recommended object corresponding to the object recommendation identifier.

According to the technical solution in this embodiment of the present disclosure, the profile information corresponding to the target account is displayed in response to the trigger operation for the profile display, where the profile information includes the object recommendation identifier corresponding to the target account, and the object recommendation identifier corresponding to the target account is determined based on the object feature information of the object in the object collection corresponding to the target account; and in response to the trigger operation for any object recommendation identifier, the recommended object display page corresponding to the object recommendation identifier is displayed, where the recommended object display page includes the object attribute information of the recommended object corresponding to the object recommendation identifier. The technical solutions in the embodiments of the present disclosure solve the problem of monotonous information display content in user-associated profiles. Profile card information can be dynamically enriched based on the object feature information of the object collection of the user, thereby displaying more object recommendation information, and enhancing a traffic redirection capability of the profile display content.

In an optional implementation, the profile information display module 410 is further configured to determine object recommendation identifier corresponding to the target account. Specifically, a method for determining the object recommendation identifier corresponding to the target account includes the following steps:
performing clustering analysis on the object feature information of the objects in the object collection to obtain a plurality of object query terms, selecting, from the plurality of object query terms, as many target object query terms as identifier display positions corresponding to object recommendation identifiers, and determining the target object query terms or the target object query terms together with corresponding object images as the object recommendation identifiers; or
determining, based on preset partial object feature information of the objects in the object collection, as many recommended objects as identifier display positions corresponding to object recommendation identifiers, and using the partial object feature information of the plurality of recommended objects or the partial object feature information together with corresponding object images as the object recommendation identifiers.

In an optional implementation, the profile information display module 410 is further configured to:
determine search popularity information for the object query terms based on historical object search information corresponding to the object collection; and
select, from all the object query terms, as many target object query terms as the identifier display positions corresponding to the object recommendation identifiers, based on the search popularity information.

In an optional implementation, the profile information display module 410 is further configured to: after performing the clustering analysis on the object feature information of the objects in the object collection to obtain the plurality of object query terms,
when a quantity of all the object query terms is less than a quantity of the identifier display positions, determine, based on the preset partial object feature information of the objects in the object collection, as many recommended objects as the identifier display positions corresponding to the object recommendation identifiers; and
use the partial object feature information of the plurality of recommended objects or the partial object feature information together with corresponding object images as the object recommendation identifiers.

In an optional implementation, the object information display module 420 may be configured to:
when the object recommendation identifier is an object query term, determine a triggered target object recommendation identifier in response to a trigger operation for any object recommendation identifier;
determine a recommended object sub-collection from the object collection based on a target object query term corresponding to the target object recommendation identifier, where recommended objects in the recommended object sub-collection are associated with the target object query term; and
display a recommended object display page corresponding to the object recommendation identifier, where the recommended object display page corresponding to the object recommendation identifier includes object attribute information of the recommended objects in the recommended object sub-collection.

In an optional implementation, the object information display module 420 may also be configured to:
display, in response to a page back instruction, an object collection display page on the recommended object display page, where the object collection display page includes object attribute information of all the objects in the object collection corresponding to the target account; and
display, in response to a page back instruction, a live streaming page on the object collection display page, where the live streaming page includes live video stream data associated with the target account.

In an optional implementation, the object information display module 420 may also be configured to:
display, in response to the trigger operation for any object recommendation identifier, a recommended object display page corresponding to the object recommendation identifier, and set a display position of the recommended object corresponding to the object recommendation identifier at a first position of the recommended object display page,
where the recommended object display page corresponding to the object recommendation identifier includes object attribute information of all the objects in the object collection, and the recommended object corresponding to the object recommendation identifier is an object in the object collection.

In an optional implementation, the profile information further includes identity information, rating information, and/or recommendation feature information of the target account, and/or object update information and/or object interaction business promotion information in the object collection.

In an optional implementation, the object information display module 420 may also be configured to:
determine, in response to a trigger operation for the object update information or the object interaction business promotion information, a recommended object sub-collection in the object collection that includes object attribute information corresponding to the object update information or the object interaction business promotion information; and
display a display page of the recommended object sub-collection.

The information display apparatus according to this embodiment of the present disclosure may perform the information display method according to any embodiment of the present disclosure, and has corresponding functional modules for performing the method and beneficial effects.

It is worth noting that the units and modules included in the above-mentioned apparatus are obtained through division merely according to functional logic, but are not limited to the above division, as long as corresponding functions can be implemented. In addition, specific names of the functional units are merely used for mutual distinguishing, and are not used to limit the scope of protection of the embodiments of the present disclosure.

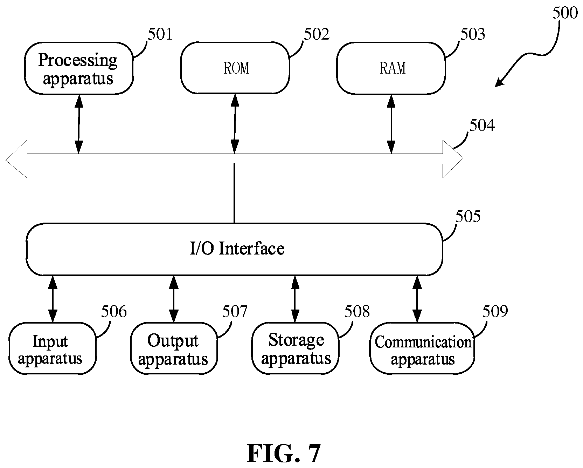

FIG. 7 is a schematic structural diagram of an electronic device according to an embodiment of the present disclosure. Reference is made to FIG. 7 below, which is a schematic structural diagram of an electronic device (e.g., a terminal device or a server in FIG. 7) 500 suitable for implementing embodiments of the present disclosure. A terminal device in this embodiment of the present disclosure may include, but is not limited to, mobile terminals such as a mobile phone, a notebook computer, a digital broadcast receiver, a personal digital assistant (PDA), a portable Android device (PAD), a portable multimedia player (PMP), and a vehicle-mounted terminal (e.g., a vehicle navigation terminal), and fixed terminals such as a digital TV and a desktop computer. The electronic device shown in FIG. 7 is merely an example, and shall not impose any limitation on the function and scope of use of the embodiments of the present disclosure.

As shown in FIG. 7, the electronic device 500 may include a processing apparatus (e.g., a central processing unit or a graphics processing unit) 501 that may perform a variety of appropriate actions and processing in accordance with a program stored in a read-only memory (ROM) 502 or a program loaded from a storage apparatus 508 into a random-access memory (RAM) 503. The RAM 503 further stores various programs and data required for the operation of the electronic device 500. The processing apparatus 501, the ROM 502, and the RAM 503 are connected to one another through a bus 504. An input/output (I/O) interface 505 is also connected to the bus 504.

Generally, the following apparatus may be connected to the I/O interface 505: an input apparatus 506 including, for example, a touchscreen, a touchpad, a keyboard, a mouse, a camera, a microphone, an accelerometer, and a gyroscope; an output apparatus 507 including, for example, a liquid crystal display (LCD), a speaker, and a vibrator; the storage apparatus 508 including, for example, a magnetic tape and a hard disk drive; and a communication apparatus 509. The communication apparatus 509 may allow the electronic device 500 to perform wireless or wired communication with other devices to exchange data. Although FIG. 7 shows the electronic device 500 having various apparatus, it should be understood that it is not required to implement or have all of the shown apparatus. It may be an alternative to implement or have more or fewer apparatus.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 509, installed from the storage apparatus 508, or installed from the ROM 502. When the computer program is executed by the processing apparatus 501, the above-mentioned functions defined in the method of the embodiments of the present disclosure are performed.

The names of messages or information exchanged between a plurality of apparatus in the implementations of the present disclosure are used for illustrative purposes only, and are not used to limit the scope of these messages or information.

The electronic device according to this embodiment of the present disclosure and the information display method according to the above-mentioned embodiments belong to the same inventive concept. For the technical details not exhaustively described in this embodiment, reference may be made to the above-mentioned embodiments, and this embodiment and the above-mentioned embodiments have the same beneficial effects.

An embodiment of the present disclosure further provides a computer storage medium, having a computer program stored thereon that, when executed by a processor, implements the information display method according to the above-mentioned embodiments.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with the instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the hypertext transfer protocol (HTTP), and may be connected to digital data communication (e.g., a communication network) in any form or medium. Examples of the communication network include a local area network ("LAN"), a wide area network ("WAN"), an internetwork (e.g., the Internet), a peer-to-peer network (e.g., an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The above-mentioned computer-readable medium carries one or more programs that, when executed by the electronic device, cause the electronic device to:
display profile information corresponding to a target account in response to a trigger operation for profile display, where the profile information includes an object recommendation identifier corresponding to the target account, and the object recommendation identifier corresponding to the target account is determined based on object feature information of objects in an object collection corresponding to the target account; and
display, in response to a trigger operation for any object recommendation identifier, a recommended object display page corresponding to the object recommendation identifier, where the recommended object display page includes object attribute information of a recommended object corresponding to the object recommendation identifier.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as a standalone software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (e.g., connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, a program segment, or part of code, and the module, the program segment, or the part of code contains one or more executable instructions for implementing the specified logical functions. It should also be noted that, in some alternative implementations, the functions marked in the blocks may also occur in an order different from that marked in the accompanying drawings. For example, two blocks shown in succession may actually be performed substantially in parallel, or may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above-mentioned content. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

An embodiment of the present disclosure further provides a computer program product, including a computer program that, when executed by a processor, causes the information display method according to any one of the embodiments of the present disclosure to be implemented.

In an implementation process of the computer program product, computer program code for performing operations of the present disclosure may be written in one or more programming languages or a combination thereof, where the programming languages include object-oriented programming languages, such as Java, Smalltalk, and C++, and further include conventional procedural programming languages, such as "C" language or similar programming languages. The program code may be completely executed on a computer of a user, partially executed on a computer of a user, executed as a standalone software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (e.g., connected through the Internet with an Internet service provider).

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls in the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments may also be implemented in combination in a single embodiment. In contrast, various features described in the context of a single embodiment may also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. An information display method, comprising:
displaying, in response to a trigger operation for profile display, profile information corresponding to a target account, wherein the profile information comprises an object recommendation identifier corresponding to the target account, and the object recommendation identifier corresponding to the target account is determined based on object feature information of objects in an object collection corresponding to the target account; and
displaying, in response to a trigger operation for any object recommendation identifier, a recommended object display page corresponding to the object recommendation identifier, wherein the recommended object display page comprises object attribute information of a recommended object corresponding to the object recommendation identifier.

2. The method according to claim 1, wherein a method for determining the object recommendation identifier corresponding to the target account comprises the following steps:
performing clustering analysis on the object feature information of the objects in the object collection to obtain a plurality of object query terms, selecting, from the plurality of object query terms, as many target object query terms as identifier display positions corresponding to object recommendation identifiers, and determining the target object query terms or the target object query terms together with corresponding object images as the object recommendation identifiers; or
determining, based on preset partial object feature information of the objects in the object collection, as many recommended objects as identifier display positions corresponding to object recommendation identifiers, and using the partial object feature information of the plurality of recommended objects or the partial object feature information together with corresponding object images as the object recommendation identifiers.

3. The method according to claim 2, wherein selecting, from the plurality of object query terms, as many target object query terms as the identifier display positions corresponding to the object recommendation identifiers comprises:
determining search popularity information for the object query terms based on historical object search information corresponding to the object collection; and
selecting, from all the object query terms, as many target object query terms as the identifier display positions corresponding to the object recommendation identifiers, based on the search popularity information.

4. The method according to claim 2, wherein after performing the clustering analysis on the object feature information of the objects in the object collection to obtain the plurality of object query terms, the method further comprises:
in response to a quantity of all the object query terms being less than a quantity of the identifier display positions, determining, based on the preset partial object feature information of the objects in the object collection, as many recommended objects as the identifier display positions corresponding to the object recommendation identifiers; and
using the partial object feature information of the plurality of recommended objects or the partial object feature information together with corresponding object images as the object recommendation identifiers.

5. The method according to any of claims 1 to 3, wherein in response to the object recommendation identifier being an object query term, displaying, in response to the trigger operation for any object recommendation identifier, the recommended object display page corresponding to the object recommendation identifier comprises:
determining, in response to the trigger operation for any object recommendation identifier, a triggered target object recommendation identifier;
determining a recommended object sub-collection from the object collection based on a target object query term corresponding to the target object recommendation identifier, wherein recommended objects in the recommended object sub-collection are associated with the target object query term; and
displaying a recommended object display page corresponding to the object recommendation identifier, wherein the recommended object display page corresponding to the object recommendation identifier comprises object attribute information of the recommended objects in the recommended object sub-collection.

6. The method according to claim 5, further comprising:
displaying, in response to a page back instruction, an object collection display page on the recommended object display page, wherein the object collection display page comprises object attribute information of all the objects in the object collection corresponding to the target account; and
displaying, in response to a page back instruction, a live streaming page on the object collection display page, wherein the live streaming page comprises live video stream data associated with the target account.

7. The method according to claim 4, wherein in response to the object recommendation identifier being a recommended object, displaying, in response to the trigger operation for any object recommendation identifier, the recommended object display page corresponding to the object recommendation identifier comprises:
displaying, in response to the trigger operation for any object recommendation identifier, a recommended object display page corresponding to the object recommendation identifier, and setting a display position of the recommended object corresponding to the object recommendation identifier at a first position of the recommended object display page,
wherein the recommended object display page corresponding to the object recommendation identifier comprises object attribute information of all the objects in the object collection, and the recommended object corresponding to the object recommendation identifier is an object in the object collection.

8. The method according to claim 1, wherein the profile information further comprises identity information, rating information, and/or recommendation feature information of the target account, and/or object update information and/or object interaction business promotion information in the object collection.

9. The method according to claim 8, further comprising:
determining, in response to a trigger operation for the object update information or the object interaction business promotion information, a recommended object sub-collection in the object collection that comprises object attribute information corresponding to the object update information or the object interaction business promotion information; and
displaying a display page of the recommended object sub-collection.

10. An information display apparatus, comprising:
a profile information display module configured to display, in response to a trigger operation for profile display, profile information corresponding to a target account, wherein the profile information comprises an object recommendation identifier corresponding to the target account, and the object recommendation identifier corresponding to the target account is determined based on object feature information of objects in an object collection corresponding to the target account; and
an object information display module configured to display, in response to a trigger operation for any object recommendation identifier, a recommended object display page corresponding to the object recommendation identifier, wherein the recommended object display page comprises object attribute information of a recommended object corresponding to the object recommendation identifier.

11. An electronic device, the electronic device comprising:
one or more processors; and
a storage apparatus configured to store one or more programs,
the one or more programs, when executed by the one or more processors, causing the one or more processors to implement the information display method according to any of claims 1 to 9.

12. A computer-readable storage medium, having a computer program stored thereon that, when executed by a processor, implements the information display method according to any of claims 1 to 9.

13. A computer program product, comprising a computer program that, when executed by a processor, implements the information display method according to any of claims 1 to 9.
